# EUROPEAN PATENT APPLICATION

(11) **EP 4 255 056 A1**
(43) Date of publication of application: **04.10.2023**
(21) Application number: 23164994.8
(22) Date of filing: 29.03.2023
(51) Int. Cl.: H04W 60/04, H04W 68/02, H04W 84/06

(54) **SELECTING A TAI AS LAST VISITED REGISTERED TAI IN A GEOGRAPHICAL LOCATION IN MOBILE COMMUNICATIONS**

(30) Priority: 29.03.2022 US 202263324663 P; 02.03.2023 US 202318116374
(71) Applicant: MediaTek Singapore Pte. Ltd., Singapore 138628 (SG)
(72) Inventor: SEBIRE, Guillaume, Oulu (FI); NIEMI, Marko, Oulu (FI); LIN, Yuan-Chieh, Hsinchu City (TW); ROY, Abhishek, San Jose (US)
(74) Representative: Hoefer & Partner Patentanwälte mbB

(57) **Abstract**

Examples pertaining to selection of a tracking area identifier, TAI, as a last visited registered TAI in a geographical location in mobile communications are described. A user equipment, UE, receives broadcast information from a network indicating a plurality of tracking area codes, TACs, for the network (410). The UE then determines one or more candidate TACs, including at least a first TAC, best representing a current geographical location of the UE from the plurality of TACs received by removing zero, one or more TACs of the plurality of TACs from consideration based on the broadcast information received over time (420).

## Description

### CROSS REFERENCE TO RELATED PATENT APPLICATION(S)

The present disclosure is part of a non-provisional application claiming the priority benefit of U.S. Patent Application No. 63/324,663, filed 29 March 2022, the content of which herein being incorporated by reference in its entirety.

### TECHNICAL FIELD

The present disclosure is generally related to mobile communications and, more particularly, to selection of a tracking area identifier (TAl) as a last visited registered TAI in a geographical location in mobile communications.

### BACKGROUND

Unless otherwise indicated herein, approaches described in this section are not prior art to the claims listed below and are not admitted as prior art by inclusion in this section.

In wireless communications, such as mobile communications under the 3^{rd} Generation Partnership Project (3GPP) standards including 5^{th} Generation (5G) New Radio (NR) and 4^{th} Generation (4G) Evolved Packet System (EPS), a tracking area is controlled by a Core Network entity and is identified either by a Tracking Area Code (TAC) within a public land mobile network (PLMN) of the Core Network or by a globally unique Tracking Area Identity (TAI). Moreover, a tracking area defines an area within which a user equipment (UE) registered to a network is assumed by the Core Network entity (e.g., a Mobility Management Entity (MME) in an EPS or an Access and Mobility Management Function (AMF) in a 5^{th} Generation System (5GS)) of the network to be reachable if the tracking area belongs to a list of tracking areas (for EPS) or registration area (for 5GS) in which the UE is registered. For a terrestrial network, in a PLMN, a terrestrial cell belongs to a single terrestrial tracking area. That is, one terrestrial base station controls the cell, and the base station is located within the area defined by the tracking area. For a non-terrestrial network, in a PLMN, a non-terrestrial cell can belong to one or more terrestrial tracking areas. That is, one or more terrestrial base stations can control the cell (via a feeder link) successively (e.g., as the non-terrestrial vehicle, such as a satellite, moves in a non-geosynchronous-equatorial-orbit (non-GEO) deployment). The terrestrial base stations can be located within different tracking areas.

The 3GPP is standardizing non-terrestrial (e.g., satellite) access for both 5G NR and Internet-of-Things (loT) such as narrowband loT (NB-loT) and enhanced machine-type communication (eMTC). Under the 3GPP, the term "satellite" refers to any non-terrestrial access. Also, a cell offering satellite access (herein referred to as a "satellite cell") may indicate its support for multiple tracking area codes (TACs) per PLMN. Moreover, a satellite cell may or may not be Earth-fixed. Tracking areas are assumed to be Earth-fixed. The UE initiates the registration procedure to the Core Network over the satellite cell. Furthermore, a TAI is composed of a TAC plus a PLMN identification (ID).

In a geographical location, the satellite cell broadcasts a list of TACs that the satellite beam/cell covers (partly or entirely). The satellite cell is not expected to broadcast a TAC that it does not cover (whether partly or entirely). As an example, at time *t*, a first satellite (Sat1) broadcasts {TAC4, TAC5}, a second satellite (Sat2) broadcasts {TAC2, TAC3, TAC4}, and a third satellite (Sat3) broadcasts {TA1, TA2}. Seen from the standpoint of a UE, its first PLMN (PLMN1) serving cell broadcasts different sets of {TACs} depending on the tracking area the cell covers (e.g., at time *t1,* the UE sees {TAC1, TAC2, TAC3} being broadcast while, at time *t2* (> *t1*)*,* the UE sees its serving cell broadcasts {TAC2, TAC3, TAC4}). A UE selecting PLMN1 considers the one or more TACs broadcast by the satellite cell as a potential last visited registered TAI, or LVRT, as (PLMN ID + TAC). According to 3GPP Technical Specification (TS) 23.501 §5.4.11.6, the NG-RAN provides all broadcast TAIs to the AMF as part of the ULI, whenever the ULI is included in the NGAP message. The NG-RAN indicates, if known, also the TAI where the UE is geographically located. As an example, at time *t2*, if the UE initiates registration, the serving gNB of the UE provides TAC2, TAC3 and TAC4 to AMF, with TAC3 being indicated as representing best the UE's geographical location.

For a first registration procedure to PLMN1, at the UE location at time *t1,* the UE sees its serving cell broadcasting PLMN1 and the set of TACs of {TAC1, TAC2, TAC3}. At time *t1,* TAC2 best represents the tracking area of UE's geographical location (e.g., serving gNB under TAC2). However, the UE itself is not aware of the TAC best representing the tracking area at its location. Without any assistance from the network, the UE may select PLMN1/TAC1 as its current TAI (TAI1), and the UE may send registration signaling with TAI1 becoming the LVRT. In the next registration procedure to PLMN1, the UE indicates the LVRT (e.g., TAI1) to the AMF. Receiving TAI1, the network assumes that the UE has moved to a different geographical location (e.g., TAC1). Consequently, in a subsequent REGISTRATION ACCEPT message, the network may arrange the UE with a non-optimal registration area (RA) based on the LVRT indicating the UE being in an area of TAC1, which is erroneous and may cause problem(s). Therefore, there is a need for a solution of selection of a TAI as a last visited registered TAI in a geographical location in mobile communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is propose schemes, concepts, designs, systems, methods and apparatus pertaining to selection of a TAI as a last visited registered TAI in a geographical location in mobile communications. It is believed that the above-described issue would be avoided or otherwise alleviated by implementing one or more of the proposed schemes described herein. A method and an apparatus according to the invention are defined in the independent claims. The dependent claims define preferred embodiment thereof. In particular, the apparatus according to the invention is preferably adapted to implement all (preferred) embodiments of the method according to the invention.

In one aspect, a method may involve a processor of an apparatus (e.g., UE) receiving broadcast information from a network indicating a plurality of TACs for the network. The method may also involve the processor determining one or more candidate TACs, including at least a first TAC, best representing a current geographical location of the UE from the plurality of TACs received by removing zero, one or more TACs of the plurality of TACs from consideration based on the broadcast information received over time.

In another aspect, an apparatus implementable in a UE may include a transceiver and a processor coupled to the transceiver. The transceiver may be configured to communicate wirelessly with a network. The processor may receive, via the transceiver, broadcast information from a network indicating a plurality of TACs for the network. The processor may also determine one or more candidate TACs, including at least a first TAC, best representing a current geographical location of the UE from the plurality of TACs received by removing zero, one or more TACs of the plurality of TACs from consideration based on the broadcast information received over time.

It is noteworthy that, although description provided herein may be in the context of certain radio access technologies, networks and network topologies such as 5^{th} Generation System (5GS) and 4G Evolved Packet System (EPS) mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), Evolved UTRAN (E-UTRAN), Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, IoT, Industrial loT (IIoT), Narrow Band Internet of Things (NB-loT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a block diagram of an example communication system in accordance with an implementation of the present disclosure.
FIG. 4 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to selection of a TAI as a last visited registered TAI in a geographical location in mobile communications. According to the present disclosure, a number of possible solutions may be implemented separately or jointly. That is, although these possible solutions may be described below separately, two or more of these possible solutions may be implemented in one combination or another.

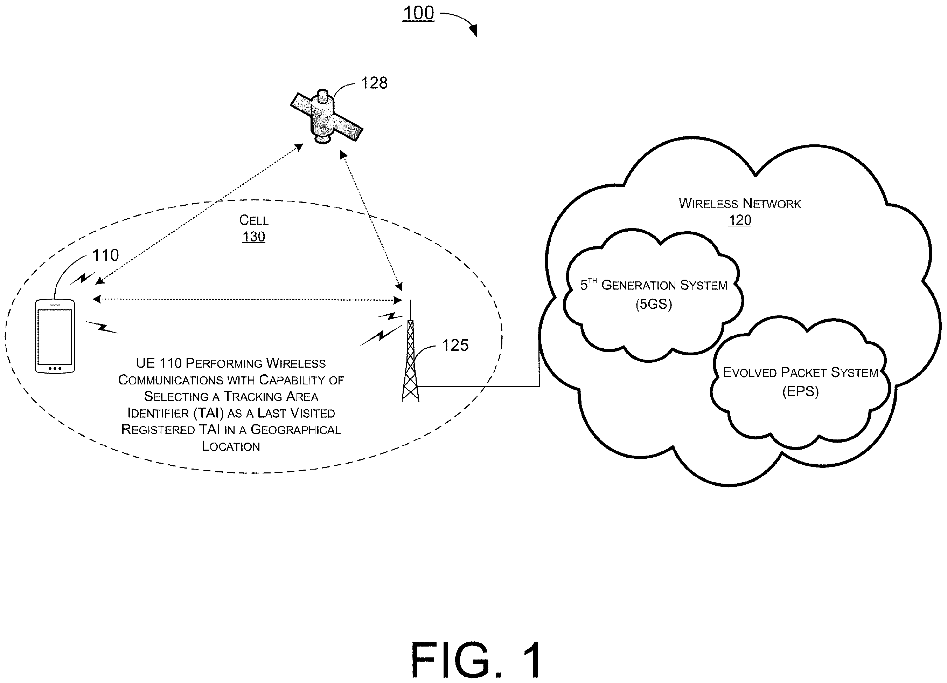

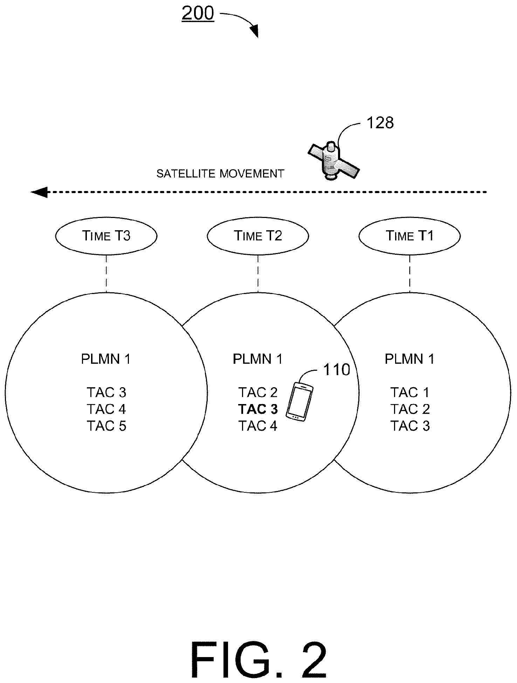

FIG. 1 illustrates an example network environment 100 in which various solutions and schemes in accordance with the present disclosure may be implemented. FIG. 2 ~ FIG. 4 illustrate examples of implementation of various proposed schemes in network environment 100 in accordance with the present disclosure. The following description of various proposed schemes is provided with reference to FIG. 1 ~ FIG. 4.

Referring to FIG. 1, network environment 100 may involve a UE 110 and a wireless network 120, which may include a 5^{th} Generation System (5GS) (and, optionally, an EPS). Depending on channel condition, availability and/or other factor(s), UE 110 may be in wireless communication with wireless network 120 via one or more terrestrial network nodes (e.g., base station(s) such as eNB, gNB and/or transmission/reception point (TRP)) and/or one or more non-terrestrial network nodes (e.g., satellite(s)). For simplicity in illustration and without limiting the scope of the present disclosure, UE 110 may be associated with or otherwise in communication with a cell 130 corresponding to a terrestrial network node 125 (e.g., gNB, eNB or TRP) and/or a non-terrestrial network node 128 (e.g., satellite) of wireless network 120. In network environment 100, UE 110 and wireless network 120 may implement various schemes pertaining to selection of a TAI as a last visited registered TAI in a geographical location in mobile communications in accordance with the present disclosure, as described below. It is noteworthy that, while the various proposed schemes may be individually or separately described below, in actual implementations each of the proposed schemes may be utilized individually or separately. Alternatively, some or all of the proposed schemes may be utilized jointly.

Under a proposed scheme in accordance with the present disclosure, without any assistance from a network (e.g., network 120) for a UE (e.g., UE 110) to determine the TAC of the tracking area best representing the UE's geographical location, firstly the UE may determine, using a first set of one or more broadcast TACs in a serving cell: (i) the one or more TACs that are not representing the tracking area of the UE's geographical location; and (ii) (if any) the one or more TACs that are unlikely representing the tracking area of the UE's geographical location. Secondly, the UE may determine, within the first set of one or more broadcast TACs in a serving cell, the one or more TACs that are best candidates to represent the tracking area(s) of the UE's geographical location, using a result from the first determination.

Under the proposed scheme, the one or more TACs that are not representing the tracking are of the UE's geographical location may include at least all TACs that are not in the first set of one or more broadcast TACs. Under the proposed scheme, the one or more TACs that are best candidates to represent the tracking area(s) of the UE's geographical location may exclude all of the one or more TACs that are not representing the tracking area of the UE's geographical location and, if any, all of the one or more TACs that are unlikely representing the tracking are of the UE's geographical location.

Moreover, under the proposed scheme, a TAC determined to be unlikely representing the tracking area of the UE's geographical location may be a TAC present in the first set but that was not present in the most recent set of one or more broadcast TACs received by the UE prior to receiving the first set.

Under a proposed scheme in accordance with the present disclosure, a UE (e.g., UE 110) may determine a TAC to be a best candidate to represent the tracking area of the UE's geographical location using a set of one or more TACs broadcast by the UE's serving cell and historical records stored in the UE of previously received broadcast TACs. Under the proposed scheme, the historical records stored in the UE may indicate the TAC as the TAC received most often and without interruption in prior serving cells successively up to and including the current serving cell.

Under the proposed scheme, upon the UE receiving a set of one or more TACs broadcast by a serving cell, the UE may perform certain operations. For instance, for each of the one or more TACs, in case that the UE has no historical record for the TAC, the UE may create a historical record for this TAC including an indication of a first occurrence of this TAC. Alternatively, in case that the UE already has a historical record for the TAC, the UE may update the historical record for this TAC by incrementing the indication of occurrence of this TAC by one unit. Moreover, for all other TACs that are not in the set of one or more TACs broadcast by the serving cell and for which the UE has a historical record, the UE may either delete the historical record or reset the corresponding indication of occurrence in the historical record. Furthermore, the UE may determine that the one or more TACs with the largest number of indication of occurrence as the best candidate(s) to represent the tracking area of the UE's geographical location.

Under a proposed scheme in accordance with the present disclosure, the UE may indicate to the network one of the one or more TACs that are best candidate(s) to represent the tracking area(s) of the UE's geographical location. In an event that, among the one or more TACs that are best candidate(s) to represent the tracking area(s) of the UE's geographical location, a TAC was last indicated to the network by the UE, the UE may indicate the same TAC again. Moreover, the indication to the network may be in a registration message. Alternatively, or additionally, the indication may be in a Last Visited Registered TAI (= PLMN ID + TAC).

FIG. 2 illustrates an example scenario 200 in which various proposed schemes in accordance with the present disclosure may be implemented. In scenario 200, in case that a network (e.g., network 120) does not explicitly provide a UE (e.g., UE 110) with a TAC representing the UE's geographical location, the UE may select a most optimal TAC representing the UE's current geographical location by using an algorithm under the proposed schemes. For instance, at time *t1,* the UE may receive a first broadcast of a list of TACs = TAC1, TAC2, TAC3. At time *t2*, the UE may receive a second broadcast of a list of TACs = TAC2, TAC3, TAC4. At time *t3*, the UE may receive a third broadcast of a list of TACs = TAC3, TAC4, TAC5. In case that at time *t1* the UE has no past record, then UE may pick any of the broadcast TACs as its current TAI and LVRT. At time *t2*, the UE may discern that TAC1 disappears, TAC4 appears, and TAC2 and TAC3 are still available. The UE may detect that it cannot be under an area of TAC1 and it is unlikely in an area of TAC4, while it may be likely in an area of either TAC2 or TAC3 (e.g., TAC2 and TAC3 are best candidates to represent the tracking area(s) of the UE's geographical location). The UE may select either TAC2 or TAC3 as its current TAI and LVRT unless more information is available in the UE that allows the UE to precisely pick between TAC2 and TAC3. Accordingly, the UE may assume that it is in the area of a TAC that it has seen broadcast the longest without interruption (e.g., the TAC that has continuously been the longest available in the broadcast list of TACs).

### Illustrative Implementations

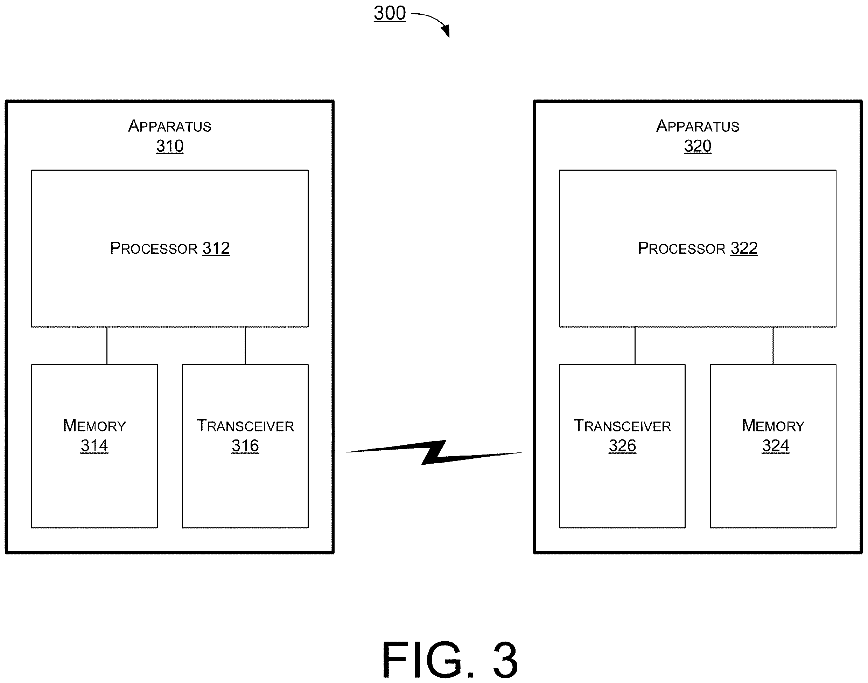

FIG. 3 illustrates an example communication system 300 having at least an example apparatus 310 and an example apparatus 320 in accordance with an implementation of the present disclosure. Each of apparatus 310 and apparatus 320 may perform various functions to implement schemes, techniques, processes and methods described herein pertaining to selection of a TAI as a last visited registered TAI in a geographical location in mobile communications, including the various schemes described above with respect to various proposed designs, concepts, schemes, systems and methods described above, including network environment 100, as well as processes described below.

Each of apparatus 310 and apparatus 320 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 310 and apparatus 320 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 310 and apparatus 320 may also be a part of a machine type apparatus, which may be an loT apparatus such as an immobile or a stationary apparatus, a home apparatus, a roadside unit (RSU), a wire communication apparatus or a computing apparatus. For instance, each of apparatus 310 and apparatus 320 may be implemented in a smart thermostat, a smart fridge, a smart door lock, a wireless speaker or a home control center. When implemented in or as a network apparatus, apparatus 310 and/or apparatus 320 may be implemented in an eNodeB in an LTE, LTE-Advanced or LTE-Advanced Pro network or in a gNB or TRP in a 5G network, an NR network or an loT network.

In some implementations, each of apparatus 310 and apparatus 320 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 310 and apparatus 320 may be implemented in or as a network apparatus or a UE. Each of apparatus 310 and apparatus 320 may include at least some of those components shown in FIG. 3 such as a processor 312 and a processor 322, respectively, for example. Each of apparatus 310 and apparatus 320 may further include one or more other components not pertinent to the proposed scheme of the present disclosure (e.g., internal power supply, display device and/or user interface device), and, thus, such component(s) of apparatus 310 and apparatus 320 are neither shown in FIG. 3 nor described below in the interest of simplicity and brevity.

In one aspect, each of processor 312 and processor 322 may be implemented in the form of one or more single-core processors, one or more multi-core processors, or one or more CISC or RISC processors. That is, even though a singular term "a processor" is used herein to refer to processor 312 and processor 322, each of processor 312 and processor 322 may include multiple processors in some implementations and a single processor in other implementations in accordance with the present disclosure. In another aspect, each of processor 312 and processor 322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 312 and processor 322 is a special-purpose machine specifically designed, arranged and configured to perform specific tasks including those pertaining to selection of a TAI as a last visited registered TAI in a geographical location in mobile communications in accordance with various implementations of the present disclosure.

In some implementations, apparatus 310 may also include a transceiver 316 coupled to processor 312. Transceiver 316 may be capable of wirelessly transmitting and receiving data. In some implementations, transceiver 316 may be capable of wirelessly communicating with different types of wireless networks of different radio access technologies (RATs). In some implementations, transceiver 316 may be equipped with a plurality of antenna ports (not shown) such as, for example, four antenna ports. That is, transceiver 316 may be equipped with multiple transmit antennas and multiple receive antennas for multiple-input multiple-output (MIMO) wireless communications. In some implementations, apparatus 320 may also include a transceiver 326 coupled to processor 322. Transceiver 326 may include a transceiver capable of wirelessly transmitting and receiving data. In some implementations, transceiver 326 may be capable of wirelessly communicating with different types of UEs/wireless networks of different RATs. In some implementations, transceiver 326 may be equipped with a plurality of antenna ports (not shown) such as, for example, four antenna ports. That is, transceiver 326 may be equipped with multiple transmit antennas and multiple receive antennas for MIMO wireless communications.

In some implementations, apparatus 310 may further include a memory 314 coupled to processor 312 and capable of being accessed by processor 312 and storing data therein. In some implementations, apparatus 320 may further include a memory 324 coupled to processor 322 and capable of being accessed by processor 322 and storing data therein. Each of memory 314 and memory 324 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 314 and memory 324 may include a type of read-only memory (ROM) such as mask ROM, programmable ROM (PROM), erasable programmable ROM (EPROM) and/or electrically erasable programmable ROM (EEPROM). Alternatively, or additionally, each of memory 314 and memory 324 may include a type of non-volatile random-access memory (NVRAM) such as flash memory, solid-state memory, ferroelectric RAM (FeRAM), magnetoresistive RAM (MRAM) and/or phase-change memory. Alternatively, or additionally, each of memory 314 and memory 324 may include a UICC.

Each of apparatus 310 and apparatus 320 may be a communication entity capable of communicating with each other using various proposed schemes in accordance with the present disclosure. For illustrative purposes and without limitation, a description of capabilities of apparatus 310, as a UE (e.g., UE 110), and apparatus 320, as a network node (e.g., terrestrial network node 125 or non-terrestrial network node 128) of a wireless network (e.g., wireless network 120), is provided below.

Under certain proposed schemes in accordance with the present disclosure with respect to selection of a TAI as a last visited registered TAI in a geographical location in mobile communications, processor 312 of apparatus 310, implemented in or as UE 110, may receive, via transceiver 316, broadcast information from a network (e.g., network 120 via apparatus 320) indicating a plurality of TACs for the network. Moreover, processor 312 may determine one or more candidate TACs, including at least a first TAC, best representing a current geographical location of the UE from the plurality of TACs received by removing zero, one or more TACs of the plurality of TACs from consideration based on the broadcast information received over time.

In some implementations, in receiving the broadcast information, processor 312 may perform certain operations. For instance, processor 312 may receive an older broadcast information at a first time indicating a first non-terrestrial coverage with a first set of one or more TACs. Additionally, processor 312 may receive a latest broadcast information at a second time after the first time indicating a second non-terrestrial coverage with a second set of one or more TACs.

In some implementations, in determining, processor 312 may perform certain other operations. For instance, processor 312 may identify at least one no TAC or one or more TACs of the plurality of TACs received as not representing a tracking area of the current geographical location of the UE. Moreover, processor 312 may identify no TAC or one or more TACs as unlikely representing the tracking area of the current geographical location of the UE. Furthermore, processor 312 may select a TAC from remaining one or more TACs of the plurality of TACs as best representing a current geographical location of the UE after removing the one or more TACs from consideration.

In some implementations, in identifying no TAC or one or more TACs of the plurality of TACs as not representing the tracking area of the current geographical location of the UE, processor 312 may identify no TAC or one or more TACs of the plurality of TACs as not representing the tracking area of the current geographical location of the UE responsive to at least one TAC being in an earlier received set of one or more TACs but not in a latest received set of one or more TACs. Alternatively, or additionally, in identifying no TAC or one or more TACs of the plurality of TACs as unlikely representing the tracking area of the current geographical location of the UE, processor 312 may identify at least one TAC of the plurality of TACs as not representing the tracking area of the current geographical location of the UE responsive to the identified at least one TAC being in a later received set of one or more TACs but not in an earlier received set of one or more TACs.

In some implementations, in determining or selecting the one or more candidate TACs, including at least the first TAC, best representing the current geographical location of the UE, processor 312 may choose the one or more candidate TACs based on one or more historical records of previously received broadcast TAC information including records of at least the older and the latest received broadcast information. In such cases, the one or more historical records may indicate one or more TACs received most often among other TACs of the remaining one or more TACs and without interruption in prior serving cells successively up to and including a current serving cell. Moreover, in choosing the one or more TACs, processor 312 may determine, according to the one or more historical records, the one or more TACs as having a largest count of occurrences among the remaining one or more TACs to represent the tracking area of the current geographical location of the UE.

In some implementations, processor 312 may also create a historical record for the first TAC with an indication of a first occurrence of the first TAC responsive to there being no existing historical record for the first TAC. Alternatively, or additionally, processor 312 may also update a historical record for the first TAC by incrementing a count of occurrences of the first TAC responsive to the historical record already existing for the first TAC. Alternatively, or additionally, processor 312 may also delete a historical record for a second TAC responsive to the second TAC not being among the plurality of TACs. Alternatively, or additionally, processor 312 may also update a historical record for a second TAC by resetting a count of occurrences of the second TAC responsive to the second TAC not being among the plurality of TACs.

In some implementations, processor 312 may also transmit, via transceiver 316, an indication to the network indicating the one or more candidate TACs as best representing the current geographical location of the UE. In such cases, the indication may be included in a registration message transmitted to the network. Alternatively, or additionally, the indication may include a Last Visited Registered TAI.

### Illustrative Processes

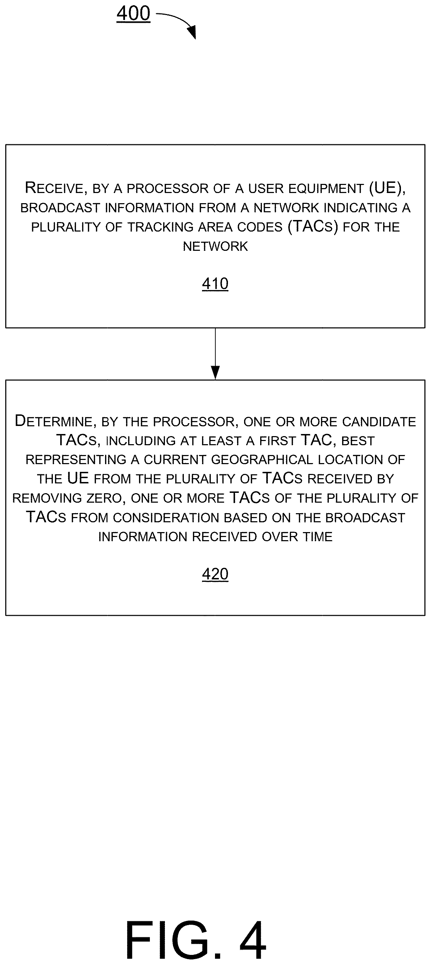

FIG. 4 illustrates an example process 400 in accordance with an implementation of the present disclosure. Process 400 may represent an aspect of implementing various proposed designs, concepts, schemes, systems and methods described above, whether partially or entirely, including those described above. More specifically, process 400 may represent an aspect of the proposed concepts and schemes pertaining to selection of a TAI as a last visited registered TAI in a geographical location in mobile communications. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed iteratively. Process 400 may be implemented by or in apparatus 310 and apparatus 320 as well as any variations thereof. Solely for illustrative purposes and without limiting the scope, process 400 is described below in the context of apparatus 310 as a UE (e.g., UE 110) and apparatus 320 as a communication entity such as a network node or base station (e.g., terrestrial network node 125 or non-terrestrial network node 128) of a network (e.g., wireless network 120). Process 400 may begin at block 410.

At 410, process 400 may involve processor 312 of apparatus 310, implemented in or as UE 110, receiving, via transceiver 316, broadcast information from a network (e.g., network 120 via apparatus 320) indicating a plurality of TACs for the network. Process 400 may proceed from 410 to 420.

At 420, process 400 may involve processor 312 determining one or more candidate TACs, including at least a first TAC, best representing a current geographical location of the UE from the plurality of TACs received by removing zero, one or more TACs of the plurality of TACs from consideration based on the broadcast information received over time.

In some implementations, in receiving the broadcast information, process 400 may involve processor 312 performing certain operations. For instance, process 400 may involve processor 312 receiving an older broadcast information at a first time indicating a first non-terrestrial coverage with a first set of one or more TACs. Additionally, process 400 may involve processor 312 receiving a latest broadcast information at a second time after the first time indicating a second non-terrestrial coverage with a second set of one or more TACs.

In some implementations, in determining, process 400 may involve processor 312 performing certain other operations. For instance, process 400 may involve processor 312 identifying no TAC or one or more TACs of the plurality of TACs received as not representing a tracking area of the current geographical location of the UE. Moreover, process 400 may involve processor 312 identifying no TAC or one or more TACs as unlikely representing the tracking area of the current geographical location of the UE. Furthermore, process 400 may involve processor 312 selecting a TAC from remaining one or more TACs of the plurality of TACs as best representing a current geographical location of the UE after removing the one or more TACs from consideration.

In some implementations, in identifying no TAC or one or more TACs of the plurality of TACs as not representing the tracking area of the current geographical location of the UE, process 400 may involve processor 312 identifying no TAC or one or more TACs of the plurality of TACs as not representing the tracking area of the current geographical location of the UE responsive to at least one TAC being in an earlier received set of one or more TACs but not in a latest received set of one or more TACs. Alternatively, or additionally, in identifying no TAC or one or more TACs of the plurality of TACs as unlikely representing the tracking area of the current geographical location of the UE, process 400 may involve processor 312 identifying at least one TAC of the plurality of TACs as not representing the tracking area of the current geographical location of the UE responsive to the identified at least one TAC being in a later received set of one or more TACs but not in an earlier received set of one or more TACs.

In some implementations, in determining or selecting the one or more candidate TACs, including at least the first TAC, best representing the current geographical location of the UE, process 400 may involve processor 312 choosing the one or more candidate TACs based on one or more historical records of previously received broadcast TAC information including records of at least the older and the latest received broadcast information. In such cases, the one or more historical records may indicate one or more TACs received most often among other TACs of the remaining one or more TACs and without interruption in prior serving cells successively up to and including a current serving cell. Moreover, in choosing the one or more TACs, process 400 may involve processor 312 determining, according to the one or more historical records, the one or more TACs as having a largest count of occurrences among the remaining one or more TACs to represent the tracking area of the current geographical location of the UE.

In some implementations, process 400 may additionally involve processor 312 creating a historical record for the first TAC with an indication of a first occurrence of the first TAC responsive to there being no existing historical record for the first TAC. Alternatively, or additionally, process 400 may further involve processor 312 updating a historical record for the first TAC by incrementing a count of occurrences of the first TAC responsive to the historical record already existing for the first TAC. Alternatively, or additionally, process 400 may further involve processor 312 deleting a historical record for a second TAC responsive to the second TAC not being among the plurality of TACs. Alternatively, or additionally, process 400 may further involve processor 312 updating a historical record for a second TAC by resetting a count of occurrences of the second TAC responsive to the second TAC not being among the plurality of TACs.

In some implementations, process 400 may additionally involve processor 312 transmitting, via transceiver 316, an indication to the network indicating the one or more candidate TACs as best representing the current geographical location of the UE. In such cases, the indication may be included in a registration message transmitted to the network. Alternatively, or additionally, the indication may include a Last Visited Registered TAI.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving, by a processor of a user equipment, in the following also referred to as UE, broadcast information from a network indicating a plurality of tracking area codes, in the following also referred to as TACs, for the network (410); and
determining, by the processor, one or more candidate TACs, including at least a first TAC, best representing a current geographical location of the UE from the plurality of TACs received by removing zero, one or more TACs of the plurality of TACs from consideration based on the broadcast information received over time (420).

2. The method of Claim 1, wherein the receiving of the broadcast information comprises:
receiving an older broadcast information at a first time indicating a first non-terrestrial coverage with a first set of one or more TACs; and
receiving a latest broadcast information at a second time after the first time indicating a second non-terrestrial coverage with a second set of one or more TACs.

3. The method of Claim 1 or 2, wherein the determining comprises:
identifying no TAC or one or more TACs of the plurality of TACs received as not representing a tracking area of the current geographical location of the UE;
identifying no TAC or one or more TACs as unlikely representing the tracking area of the current geographical location of the UE; and
selecting a TAC from remaining one or more TACs of the plurality of TACs as best representing a current geographical location of the UE after removing the one or more TACs from consideration.

4. The method of Claim 3, wherein the identifying no TAC or one or more TACs of the plurality of TACs as not representing the tracking area of the current geographical location of the UE comprises identifying no TAC or one or more TACs of the plurality of TACs as not representing the tracking area of the current geographical location of the UE responsive to at least one TAC being in an earlier received set of one or more TACs but not in a latest received set of one or more TACs; and/or
wherein the identifying of no TAC or one or more TACs of the plurality of TACs as unlikely representing the tracking area of the current geographical location of the UE comprises identifying at least one TAC of the plurality of TACs as not representing the tracking area of the current geographical location of the UE responsive to the identified at least one TAC being in a later received set of one or more TACs but not in an earlier received set of one or more TACs.

5. The method of any one of Claims 1 to 4, wherein the determining of the one or more candidate TACs, including at least the first TAC, best representing the current geographical location of the UE comprises choosing the one or more candidate TACs based on one or more historical records of previously received broadcast TAC information including records of at least the older and the latest received broadcast information.

6. The method of Claim 5, wherein the one or more historical records indicate one or more TACs received most often among other TACs of the remaining one or more TACs and without interruption in prior serving cells successively up to and including a current serving cell.

7. The method of Claim 5 or 6, wherein the choosing of the one or more TACs comprises determining, according to the one or more historical records, the one or more TACs as having a largest count of occurrences among the remaining one or more TACs to represent the tracking area of the current geographical location of the UE.

8. The method of any one of Claims 5 to 7, further comprising:
creating, by the processor, a historical record for the first TAC with an indication of a first occurrence of the first TAC responsive to there being no existing historical record for the first TAC; and/or
updating, by the processor, a historical record for the first TAC by incrementing a count of occurrences of the first TAC responsive to the historical record already existing for the first TAC; and/or
deleting, by the processor, a historical record for a second TAC responsive to the second TAC not being among the plurality of TACs; and/or
updating, by the processor, a historical record for a second TAC by resetting a count of occurrences of the second TAC responsive to the second TAC not being among the plurality of TACs.

9. The method of any one of Claims 1 to 8, further comprising:
transmitting, by the processor, an indication to the network indicating the one or more candidate TACs as best representing the current geographical location of the UE.

10. The method of Claim 9, wherein the indication is included in a registration message transmitted to the network; and/or
wherein the indication comprises a Last Visited Registered tracking area identifier, in the following also referred to as TAI.

11. An apparatus (310) implementable in a user equipment, in the following also referred to as UE, comprising:
a transceiver (316) configured to communicate wirelessly with a network; and
a processor (312) coupled to the transceiver (316) and configured to perform operations comprising:
receiving, via the transceiver (316), broadcast information from the network indicating a plurality of tracking area codes, in the following also referred to as TACs, for the network; and
determining one or more candidate TACs, including at least a first TAC, best representing a current geographical location of the UE from the plurality of TACs received by removing zero, one or more TACs of the plurality of TACs from consideration based on the broadcast information received over time.

12. The apparatus (310) of Claim 11, wherein, in receiving the broadcast information, the processor (312) is configured to perform operations comprising:
receiving an older broadcast information at a first time indicating a first non-terrestrial coverage with a first set of one or more TACs; and
receiving a latest broadcast information at a second time after the first time indicating a second non-terrestrial coverage with a second set of one or more TACs.

13. The apparatus (310) of Claim 11 or 12, wherein, in determining, the processor (312) is configured to perform operations comprising:
identifying no TAC or one or more TACs of the plurality of TACs received as not representing a tracking area of the current geographical location of the UE;
identifying no TAC or one or more TACs as unlikely representing the tracking area of the current geographical location of the UE; and
selecting a TAC from remaining one or more TACs of the plurality of TACs as best representing a current geographical location of the UE after removing the one or more TACs from consideration.

14. The apparatus (310) of any one of Claims 11 to 13, wherein, in determining the one or more candidate TACs, including at least the first TAC, best representing the current geographical location of the UE, the processor (312) is configured to choose the one or more candidate TACs based on one or more historical records of previously received broadcast TAC information including records of at least the older and the latest received broadcast information, wherein the one or more historical records indicate one or more TACs received most often among other TACs of the remaining one or more TACs and without interruption in prior serving cells successively up to and including a current serving cell.

15. The apparatus (310) of any one of Claims 11 to 14, wherein, in determining the one or more candidate TACs, including at least the first TAC, best representing the current geographical location of the UE, the processor (312) is configured to choose the one or more candidate TACs based on one or more historical records of previously received broadcast TAC information including records of at least the older and the latest received broadcast information by determining, according to the one or more historical records, the one or more TACs as having a largest count of occurrences among the remaining one or more TACs to represent the tracking area of the current geographical location of the UE.
